# EUROPEAN PATENT SPECIFICATION

(11) **EP 2 873 575 B1**
(45) Date of publication and mention of the grant of the patent: **20.07.2016**
(21) Application number: 13192738.6
(22) Date of filing: 13.11.2013
(51) Int. Cl.: B60T 11/18

(54) **Vehicle braking system having a friction brake and a regenerative brake and method for operating the same**
Fahrzeugbremssystem mit einer Reibungsbremse und einer regenerativen Bremse und Verfahren zum Betrieb eines derartigen Systems
Système de freinage de véhicule présentant un frein à friction et un freinage par récupération et son procédé de fonctionnement

(43) Date of publication of application: 20.05.2015
(73) Proprietor: Ford Otomotiv Sanayi Anonim Sirketi, 34885 Sancaktepe/Istanbul (TR)
(72) Inventor: Duman, Ali, 34674 Uskudar/ISTANBUL (TR); Akça/Bayrak, Dilek, Kurtköy/Pendik/Istanbul (TR); Ergin, Eren, KARTAL/Istanbul (TR)
(74) Representative: Illing, Rolf

(56) References cited:
- US-A1- 2011 126 663

## Description

The present invention relates to an improved vehicle braking system and more particularly to a vehicle braking system comprising at least one friction brake and a regenerative brake, wherein the friction brake is operated via a brake pedal and a brake master cylinder. Furthermore, the invention relates to a method for operating such a vehicle braking system.

Document US 2011/126663 discloses a vehicle braking system of the kind mentioned above.

Hybrid electric vehicles (HEV) or electric vehicles in general, such as battery electric vehicles (BEV), usually have an electric machine which is operated in either motor mode or generator mode depending on the actual driving state. In motor mode the electric machine generates a driving torque to propel the vehicle. In generator mode, on the other hand, the kinetic energy released during vehicle deceleration is converted into electrical energy (regenerative braking). The electrical energy thus obtained is generally stored in an energy accumulator unit, such as a battery or supercapacitor, and may be used in other driving situations, for example, to propel the vehicle or to provide electrical energy to electrical consumers. The vehicle efficiency may be substantially increased thereby.

Furthermore, it is known to provide electric vehicles with friction brakes (herein also referred to as a service brake) which can be operated by a driver of the vehicle by means of a brake pedal actuating a brake master cylinder. Such friction braking systems are generally hydraulic braking systems which are controlled by a hydraulic control unit (HCU).

In electric vehicles which have the regenerative braking system as part of the service brake the regenerative brake is only activated when the service brake pedal is operated by the driver. In this manner, a driver's desire to brake can be detected at the brake pedal and a braking force can be applied to the wheels of the vehicle by the friction braking system and/or the regenerative braking system. Other ways of actuating the regenerative braking system are known as well. For example, in such vehicles where the regenerative braking system is not part of the service brake, i. e. the regenerative brake is not activated by operating the service brake pedal, the regenerative braking system may be activated as soon as the accelerator pedal is released. Yet another method of activating the regenerative braking system is by operating a shifter similar to the operation of a retarder which might be installed in heavy commercial vehicles, for example.

However, regenerative braking torque generated by the electric machine operating in generator mode depends on vehicle speed. Generally, the higher the vehicle speed the higher the brake torque generated by the generator. Thus, during deceleration of the vehicle the regenerative braking torque applied to the wheels of the vehicle may decrease even though the driver's brake demand does not change. This causes an unsafe feeling for the driver and may result in undesired panic behaviours.

In addition to the regenerative braking torque dependency on vehicle speed, the generator torque is also power-dependent. In principle, the braking torque increases as more electrical power is generated. Due to the actual charge level of the electrical energy accumulator unit the generator torque may vary greatly and even be turned off in the case where the accumulator unit is fully charged or reaches a maximum allowable operating temperature.

For the above mentioned reasons, according to ECE regulations the friction braking systems of electric vehicles are required to compensate the regenerative braking torque variations. To this end, electronic stability programs (ESP) are widely used to modulate the braking torque of an electrohydraulic friction brake, but these systems require specific hardware such as special active vacuum boosters or active hydraulic booster units which are generally operated by a dedicated hydraulic electronic control unit (HECU). Therefore, such systems are usually quite complex and expensive to manufacture. The development costs for such systems are specifically high, especially in the case of low volume special BEV projects. Furthermore, high piece costs for the required special hardware also boost the overall expenses for those systems.

It is therefore an object of the present invention to provide an improved braking system for electric vehicles or hybrid electric vehicles having at least one friction brake and a regenerative brake. The system shall be easily adjustable for different types of vehicles, offer high energy recuperation and be less complex and thus cheaper to manufacture and implement than conventional regenerative braking systems. It is a further object of the invention to provide a method for operating such an improved vehicle braking system.

It is to be understood that the features disclosed in the following detailed description may be combined in any technically reasonable and practical way and disclose further embodiments of the present invention.

According to the present invention there is provided a vehicle braking system comprising at least one friction brake, a regenerative brake, a compensation unit, a sensor and an electronic control unit. The friction brake (hydraulically actuated) can be operated via a brake pedal and a brake master cylinder. To this end, the compensation unit couples the brake pedal mechanically with the brake master cylinder. According to the present invention this mechanical coupling is not fixed but modifiable, i.e. the mechanical coupling between the brake pedal and the brake master cylinder can be manipulated by the compensation unit. Further, the sensor, such as a linear or angular sensor, is adapted to detect at least an initial range of a brake pedal travel and the electronic control unit is adapted to evaluate a signal from the sensor to operate the regenerative brake when a user actuates the brake pedal in the initial range. The electronic control unit is further adapted to monitor a relationship between a user's brake demand and a brake torque generated by the regenerative brake and to modify the mechanical coupling between the brake pedal and the brake master cylinder via the compensation unit to thereby operate the friction brake when the user's brake demand does not correlate with the brake torque generated by the regenerative brake in order to re-establish this correlation.

For example, the user's brake demand may be determined by means of the brake pedal travel measured by the above mentioned brake pedal sensor. The brake torque generated by the regenerative brake may be monitored by means of a vehicle deceleration (or may be extracted directly from a power train control unit if available). For example, the vehicle deceleration can be measured with specific acceleration sensors and/or can be calculated using wheel speed sensor signals.

The proposed vehicle braking system according to the present invention has the capability to modify the mechanical coupling between the brake pedal and the brake master cylinder of the friction brake, in particular a hydraulically operated friction brake, during an operation of the regenerative brake. Thus, the regenerative brake can be operated independently from a hydraulic control unit (HCU) controlling the hydraulic friction brake which renders the inventive braking system more easily adjustable to different vehicle types, for example, as only software parameters of the electronic control unit controlling the compensation unit have to be adapted to the specific vehicle type. Moreover, the braking system according to the invention could even be used to upgrade a conventional hydraulic friction braking system of a vehicle by just interposing the compensation unit between the brake pedal and the brake master cylinder and adding the regenerative brake components to the friction brake. The hydraulic friction braking system can thus remain unchanged. Furthermore, the implementation of the inventive braking system can be realized at more reasonable costs as no changes have to be made, for example, to the control algorithms of the hydraulic control unit and other components of the brake hydraulics. Moreover, the proposed braking system advantageously offers a very high energy recuperation as it is possible to ensure that the regenerative brakes are always operated before the friction brakes.

According to a preferred embodiment of the present invention the compensation unit comprises a brake pedal actuating element operatively connected to the brake pedal, a brake master cylinder actuating element operatively connected to the brake master cylinder, and an actuator, wherein the brake pedal actuating element and the brake master cylinder actuating element are displaceable relative to each other by means of the actuator. Advantageously, the actuator always ensures a mechanical connection between the two actuating elements to which, for example, are connected a brake pedal pushrod and a brake master cylinder pushrod, respectively. Thus, a mechanical coupling between the brake pedal and the brake master cylinder is always maintained.

Preferably, the actuator used to displace the brake pedal actuating element and the brake master cylinder actuating element relative to each other is a direct current (DC) electric motor. Alternatively, the actuator can also be a cylinder/piston unit.

According to another preferred embodiment of the present invention the compensation unit comprises one of a pinion and gear mechanism, a ring gear and gear mechanism, a rack and pinion mechanism, and a cam mechanism.

According to the present invention there is also provided a method for operating a vehicle braking system comprising at least one friction brake which can be operated via a brake pedal and a brake master cylinder, a regenerative brake, and a compensation unit mechanically coupling the brake pedal with the brake master cylinder, the method comprising: detecting at least an initial range of a brake pedal travel via a sensor; operating the regenerative brake when a user actuates the brake pedal in the initial range; monitoring a relationship between a user's brake demand and a brake torque generated by the regenerative brake; and modifying the mechanical coupling between the brake pedal and the brake master cylinder via the compensation unit to thereby operate the friction brake when the user's brake demand does not correlate with the brake torque generated by the regenerative brake in order to re-establish this correlation.

According to a preferred embodiment of the present invention modifying the mechanical coupling between the brake pedal and the brake master cylinder includes displacing a brake pedal actuating element of the compensation unit operatively connected to the brake pedal and a brake master cylinder actuating element of the compensation unit operatively connected to the brake master cylinder relative to each other by means of an actuator.

According to yet another preferred embodiment of the present invention the vehicle braking system further comprises an electronic stability control unit and/or an anti-lock braking system unit, wherein the actual adjustment of the compensation unit is fixedly maintained upon the occurrence of an electronic stability control event or anti-lock braking system event until the brake pedal is released.

According to still another preferred embodiment of the present invention the user's brake demand is determined via the brake pedal travel.

According to yet another preferred embodiment of the present invention the brake torque generated by the regenerative brake is determined via a vehicle deceleration. For example, the vehicle deceleration can be determined by means of a specific acceleration sensor and/or by means of a wheel speed sensor and/or may be extracted directly from a power train control unit if available.

According to still another preferred embodiment of the present invention the compensation unit is adjusted such that there is no counteracting force from the brake master cylinder to the brake pedal in the initial range. Preferably, the brake pedal counteracting force in the initial range is simulated by means of a spring element.

According to yet another preferred embodiment of the present invention the brake torque generated by the regenerative brake is increased as the brake pedal travel increases in the initial range.

Further objects and advantages of the present invention will become more apparent from the following detailed description of preferred embodiments shown in the accompanying drawings. This description should not be considered limiting in any way. With reference to the accompanying drawings, like elements are numbered alike:
- FIG. 1: depicts a schematic view of a portion of a vehicle according to an embodiment of the present invention;
- FIG. 2: depicts a schematic cross-sectional view of an embodiment of a compensation unit according to the present invention;
- FIG. 3: depicts a schematic cross-sectional view of another embodiment of a compensation unit according to the present invention;
- FIG. 4: depicts a schematic cross-sectional view of yet another embodiment of a compensation unit according to the present invention;
- FIG. 5: depicts a schematic cross-sectional view of still another embodiment of a compensation unit according to the present invention; and
- FIG. 6: depicts a schematic cross-sectional view of yet another embodiment of a compensation unit according to the present invention.

A detailed description of various embodiments of the disclosed apparatus and method are presented herein by way of exemplification and not limitation with reference to the figures.

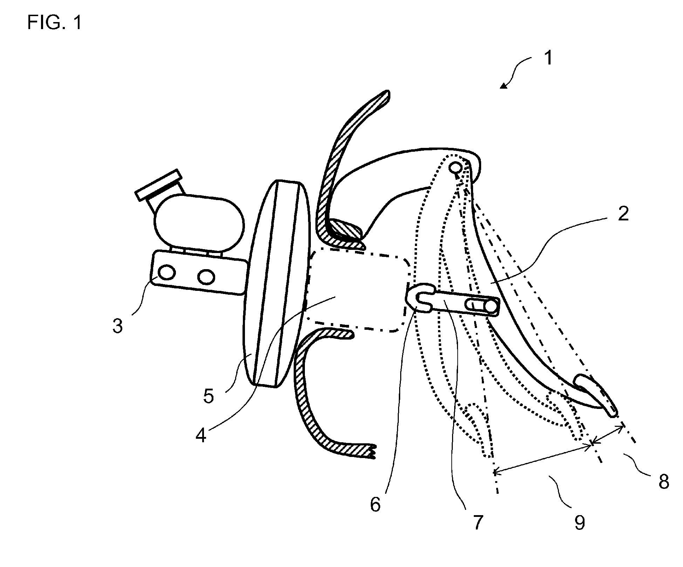

FIG. 1 shows a portion of a vehicle braking system 1 according to an embodiment of the present invention. The braking system 1 includes at least one friction brake (not shown) which can be operated via a brake pedal 2 and a brake master cylinder 3. Furthermore, the braking system 1 comprises a regenerative brake (also not shown), and a compensation unit 4 that mechanically couples the brake pedal 2 with the brake master cylinder 3 in a modifiable manner as will be explained in detail below. As can be seen from FIG. 1, a conventional brake force booster 5 is interposed between the compensation unit 4 and the brake master cylinder 3. It should be understood that the brake force booster 5 is an optional component of the vehicle braking system 1 which could also be omitted.

A brake pedal actuating element 6 of the compensation unit 4 is connected to the brake pedal 2 via a brake pedal pushrod 7, as shown in FIG. 1. A brake master cylinder actuating element (not shown in FIG. 1) is connected to a brake master cylinder pushrod (not shown) via the brake force booster 5.

A brake pedal travel can be determined by a sensor (not shown), for example, a linear sensor or an angular sensor. As indicated in FIG. 1, according to the present invention the overall brake pedal travel is divided into two ranges: an initial range 8 and a range 9 that goes beyond the initial range 8. In the initial range 8 there is no counteracting force from the brake master cylinder 3 to the brake pedal 2. Within the initial range 8 of the brake pedal travel the counteracting force is preferably simulated by means of a spring element (not shown). According to the present invention, at least the initial range 8 can be detected by the aforementioned sensor.

Furthermore, the vehicle braking system according to the present invention includes an electronic control unit (not shown) that is capable of evaluating the signal from the sensor to operate the regenerative brake when a user actuates the brake pedal 2 in the initial range 8. Thus, in the initial range 8 of the brake pedal travel only the regenerative brake is operated by the electronic control unit when the brake pedal 2 is actuated by the user. Beyond the initial range 8, i.e. within range 9, the brake pedal pushrod 7 gets into a force reaction contact with the brake master cylinder pushrod and thus the friction brake adds up to the brake torque generated by the regenerative brake. Thus, the friction brake and the regenerative brake may be active simultaneously in range 9 of the brake pedal travel.

A user's brake demand is preferably determined by the sensor measuring the actual brake pedal travel. A brake torque generated by the regenerative brake can be obtained, for example, by a specific acceleration sensor and/or can be calculated using wheel speed sensor signals.

As already explained in the introductory part of this description the brake torque generated by the regenerative brake highly depends on various vehicle operating states, such as vehicle speed, charging state of an energy accumulator unit which is used to store the recuperated electrical energy, operating temperature of the accumulator unit, etc. The electronic control unit is therefore adapted to monitor a relationship between the user's brake demand and the brake torque actually generated by the regenerative brake. During an ideal regenerative brake torque generation, i.e. the brake torque generated by the regenerative brake complies with the user's brake demand, no intervention of the electronic control unit controlling the compensation unit is required. However, if the electronic control unit detects that the user's brake demand does not correlate with the brake torque generated by the regenerative brake it modifies the mechanical coupling between the brake pedal 2 and the brake master cylinder 3 via the compensation unit 4 to thereby operate the friction brake in addition to the regenerative brake in order to re-establish the correlation between the user's brake demand and the brake torque applied to the wheels of the vehicle.

Preferably, the electronic control unit is further adapted to communicate with other electrical components of the vehicle, such as a vehicle control unit, a hydraulic brake control unit controlling the friction brake, a CAN (Controller Area Network) line of the vehicle to obtain any necessary sensor data (e.g. from the acceleration sensor and/or the wheel speed sensor), an electronic stability control (ESP) unit and/or an anti-lock braking system (ABS) unit, etc.

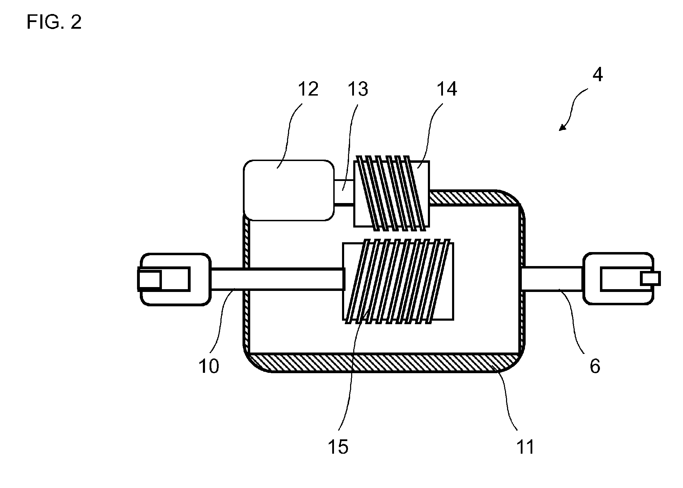

In order to modify the mechanical coupling between the brake pedal 2 and the brake master cylinder 3 a first preferred embodiment of the compensation unit 4 according to the present invention is shown in FIG. 2. As can be seen, the compensation unit 4 comprises the above mentioned brake pedal actuating element 6 and a brake master cylinder actuating element 10. In the preferred embodiment shown the brake pedal actuating element 6 is connected to the brake pedal 2 via the brake pedal pushrod 7 (see FIG. 1) and to the brake master cylinder 3 via the brake master cylinder pushrod (possibly via the brake force booster 5 as shown in FIG. 1). As shown in FIG. 2, the brake pedal actuating element 6 is fixedly connected to a housing 11 of the compensation unit 4 while the brake master cylinder actuating element 10 is slidably supported by the housing 11. Thus, the brake pedal actuating element 6 can be displaced relative to the brake master cylinder actuating element 10. This relative movement is controlled by an actuator 12, preferably a direct current (DC) electric motor. In the embodiment shown in FIG. 2 the actuator 12 is fixedly connected to the housing 11. Preferably, the actuator 12, i. e. the DC electric motor, is operated by a power train control unit (not shown) upon receiving a message from the electronic control unit operating the compensation unit 4.

As shown in FIG. 2, the actuator 12 drives a rotatable output shaft 13 to which a pinion 14 is fixedly connected so that it rotates together with the output shaft 13. Furthermore, a gear 15 is fixedly connected to the brake master cylinder actuating element 10. The pinion 14 meshes with the gear 15 so that a mechanical coupling between the brake pedal actuating element 6 and the brake master cylinder actuating element and thus between the brake pedal 2 and the brake master cylinder 3 is always ensured.

Now, if the electronic control unit controlling the compensation unit 4 detects a deviation between the user's brake demand and the brake torque generated by the regenerative brake, e.g. the brake torque generated by the regenerative brake is less than the user's brake demand, it activates the actuator 12 that thereby drives the pinion 14 via the output shaft 13 such that the brake master cylinder actuating element 10 is slightly pushed out of the housing 11 towards the brake master cylinder 3. Thus, the friction brake is operated by the compensation unit 4 and adds additional brake torque to the brake torque generated by the regenerative brake. Eventually, the friction brake will compensate the brake torque and re-establish the correlation between the user's brake demand and the brake torque applied to the wheels of the vehicle.

The electronic control unit controlling the compensation unit 4 is preferably an independent control unit that is dedicated for its duty. Thus, the compensation unit 4 can be implemented independently from other brake components of the vehicle braking system according to the present invention, for example, the vehicle electronic control unit or the hydraulic control unit of the friction brake.

In addition to the aforementioned operation of the compensation unit 4 the electronic control unit controlling the compensation unit 4 is preferably adapted to monitor failure states of the regenerative brake as well, e.g. the regenerative brake cannot generate any brake torque due to a fully charged accumulator unit or due to an operating temperature of the accumulator unit that is too high to allow further charging of the same. In such a case the electronic control unit operates the friction brake via the compensation unit 4 immediately when the user of the vehicle initiates a braking action.

Moreover, in the presence of an ESP unit and/or an ABS unit in the vehicle the electronic control unit controlling the compensation unit 4 is also adapted to fixedly maintain the actual operating state of the compensation unit 4 upon the occurrence of an ESP or ABS event until the brake pedal 2 is released again. When the brake pedal 2 is released the compensation unit 4 is always returned to its initial operating position.

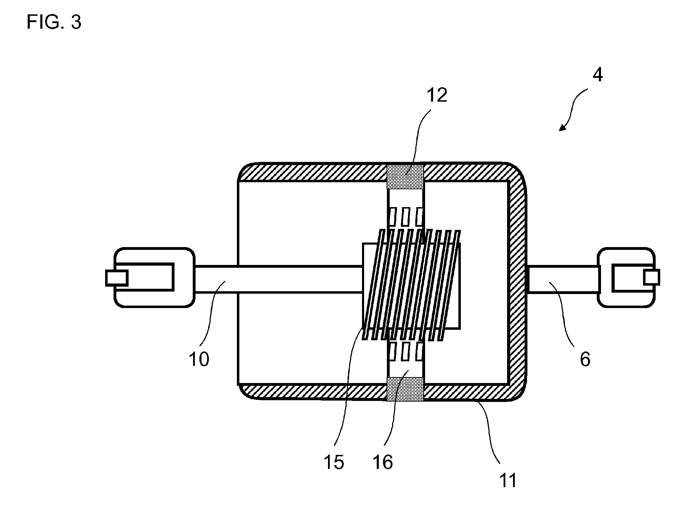

FIG. 3 shows a schematic view of another preferred embodiment of the compensation unit 4 according to the present invention. As illustrated in FIG. 3, the actuator 12 drives a ring gear 16 that meshes with the gear 15 of the brake master cylinder actuating element 10. As with the embodiment shown in FIG. 2, the brake pedal actuating element 6 is fixedly connected to the housing 11 of the compensation unit 4 whereas the brake master cylinder actuating element 10 is slideably supported by the housing 11. Thus, the brake pedal actuating element 6 can be displaced relative to the brake master cylinder actuating element 10 by the operation of the actuator 12 as already described above.

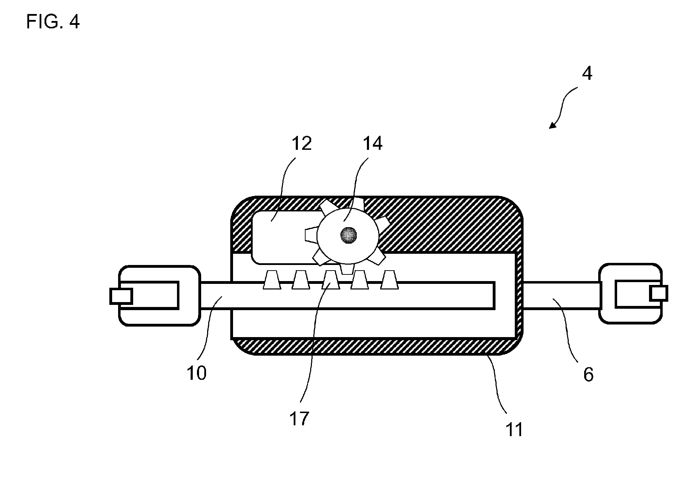

FIG. 4 shows a schematic view of yet another preferred embodiment of the compensation unit 4 according to the present invention. As illustrated in FIG. 4, the actuator 12 drives the pinion 14 that this time meshes with a rack 17 of the brake master cylinder actuating element 10. As with the embodiment shown in FIGs. 2 and 3, the brake pedal actuating element 6 is fixedly connected to the housing 11 of the compensation unit 4 whereas the brake master cylinder actuating element 10 is slideably supported by the housing 11. Thus, the brake pedal actuating element 6 can be displaced relative to the brake master cylinder actuating element 10 by the operation of the actuator 12 as already described above.

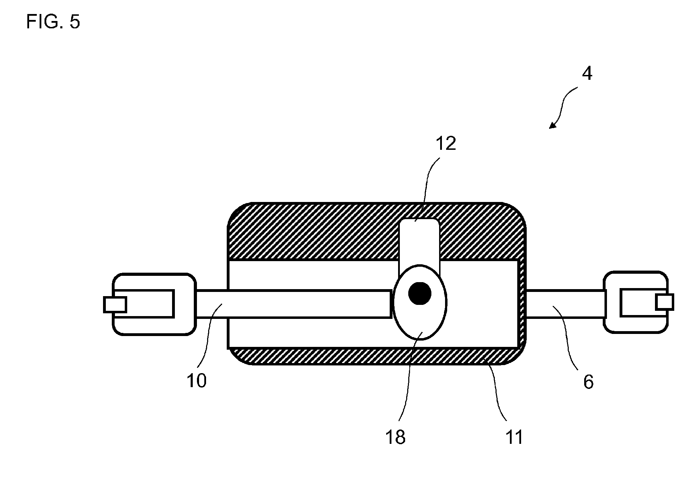

FIG. 5 shows a schematic view of still another preferred embodiment of the compensation unit 4 according to the present invention. As illustrated in FIG. 5, this time the actuator 12 drives a cam 18 that abuts on an end face of the brake master cylinder actuating element 10. Again, the brake pedal actuating element 6 is fixedly connected to the housing 11 of the compensation unit 4 whereas the brake master cylinder actuating element 10 is slideably supported by the housing 11. Thus, the brake pedal actuating element 6 can be displaced relative to the brake master cylinder actuating element 10 by the operation of the actuator 12 as already described above.

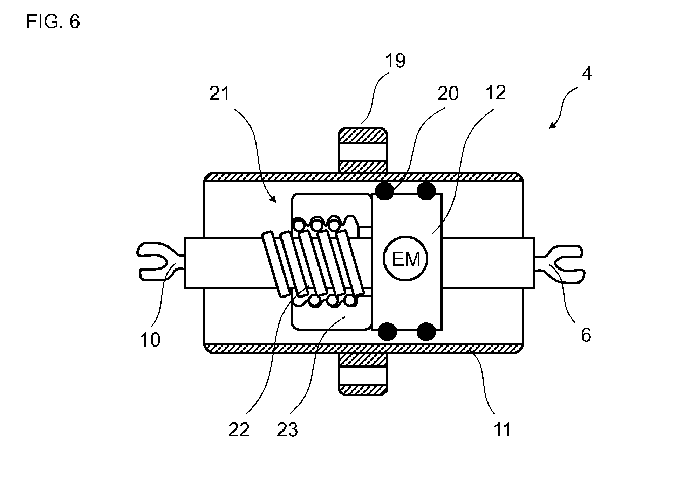

FIG. 6 shows a schematic view of yet another preferred embodiment of the compensation unit 4 according to the present invention. Due to the fixed connection between the brake pedal actuating element 6 and the housing 11 in the embodiments shown in FIGs. 2 to 5 the housing 11 of these embodiments moved along with the movement of the brake pedal actuating element 6 (floating type). However, in the embodiment shown in FIG. 6, the housing 11 is fixedly mounted to, for example, a dash panel of the vehicle (not shown) or a brake pedal bracket (not shown) by attachment means 19 (fixed type), i.e. the housing 11 does not move along with the brake pedal actuating element 6. As shown in FIG. 6, both the brake pedal actuating element 6 and the brake master cylinder actuating element 10 are slideably supported by the housing 11. The actuator 12 is fixedly connected to the brake pedal actuating element 6 and can slide along an inner wall of the housing 11 by means of a sliding mechanism 20, e.g. a ball bearing.

As illustrated in FIG. 6, the actuator 12 operates a ball screw drive 21. To this end, an end portion of the brake master cylinder actuating element 10 is formed as a ball screw 22 onto which a ball nut 23 driven by the actuator 12 is rotatably mounted.

It is to be noted that all the variants of the power trains illustrated in conjunction with the floating type compensation unit 4 shown in FIGs. 2 to 5, i.e. the pinion 14 and gear 15 mechanism, the ring gear 17 and gear 15 mechanism, the rack 17 and pinion 14 mechanism, and the cam 18 mechanism, can also be applied to the fixed type compensation unit 4 shown in FIG. 6.

Preferably the vehicle braking system according to the present invention and the method for operating the same are used in an electric or hybrid electric vehicle.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best modes contemplated for carrying out this invention, but that the invention will include all embodiments falling within the scope of the claims.

### List of reference numerals:

- 1: Vehicle braking system
- 2: Brake pedal
- 3: Brake master cylinder
- 4: Compensation unit
- 5: Brake force booster
- 6: Brake pedal actuating element
- 7: Brake pedal pushrod
- 8: Initial range of brake pedal travel
- 9: Range of brake pedal travel beyond initial range
- 10: Brake master cylinder actuating element
- 11: Housing
- 12: Actuator
- 13: Output shaft
- 14: Pinion
- 15: Gear
- 16: Ring gear
- 17: Rack
- 18: Cam
- 19: Attachment means
- 20: Sliding mechanism
- 21: Ball screw drive
- 22: Ball screw
- 23: Ball nut

## Claims

1. A vehicle braking system comprising
at least one friction brake which can be operated via a brake pedal (2) and a brake master cylinder (3),
a regenerative brake,
a compensation unit (4) mechanically coupling the brake pedal (2) with the brake master cylinder (3) in a modifiable manner,
a sensor adapted to detect at least an initial range (8) of a brake pedal travel, and
an electronic control unit adapted to
evaluate a signal from the sensor to operate the regenerative brake when a user actuates the brake pedal (2) in the initial range (8),
monitor a relationship between a user's brake demand and a brake torque generated by the regenerative brake, and
modify the mechanical coupling between the brake pedal (2) and the brake master cylinder (3) via the compensation unit (4) to thereby operate the friction brake when the user's brake demand does not correlate with the brake torque generated by the regenerative brake in order to re-establish this correlation.

2. The vehicle braking system according to claim 1, wherein the compensation unit (4) comprises a brake pedal actuating element (6) operatively connected to the brake pedal (2), a brake master cylinder actuating element (10) operatively connected to the brake master cylinder (3), and an actuator (12), wherein the brake pedal actuating element (6) and the brake master cylinder actuating element (10) are displaceable relative to each other by means of the actuator (12).

3. The vehicle braking system according to claim 1 or 2, wherein the compensation unit (4) comprises one of a pinion (14) and gear (15) mechanism, a ring gear (16) and gear (15) mechanism, a rack (17) and pinion (14) mechanism, and a cam (18) mechanism.

4. A method for operating a vehicle braking system particularly according to one of the preceding claims, comprising at least one friction brake which can be operated via a brake pedal (2) and a brake master cylinder (3), a regenerative brake, and a compensation unit (4) mechanically coupling the brake pedal (2) with the brake master cylinder (3), the method comprising:
detecting at least an initial range (8) of a brake pedal travel via a sensor;
operating the regenerative brake when a user actuates the brake pedal (2) in the initial range (8);
monitoring a relationship between a user's brake demand and a brake torque generated by the regenerative brake; and
modifying the mechanical coupling between the brake pedal (2) and the brake master cylinder (3) via the compensation unit (4) to thereby operate the friction brake when the user's brake demand does not correlate with the brake torque generated by the regenerative brake in order to re-establish this correlation.

5. The method according to claim 4, wherein modifying the mechanical coupling between the brake pedal (2) and the brake master cylinder (3) includes displacing a brake pedal actuating element (6) of the compensation unit (4) operatively connected to the brake pedal (2) and a brake master cylinder actuating element (10) of the compensation unit (4) operatively connected to the brake master cylinder (3) relative to each other by means of an actuator (12).

6. The method according to claim 4 or 5, the vehicle braking system further comprising an electronic stability control unit and/or an anti-lock braking system unit, wherein the actual adjustment of the compensation unit (4) is fixedly maintained upon the occurrence of an electronic stability control event or anti-lock braking system event until the brake pedal (2) is released.

7. The method according to any of claims 4 to 6, wherein the user's brake demand is determined via the brake pedal travel.

8. The method according to any of claims 4 to 7, wherein the brake torque generated by the regenerative brake is determined via a vehicle deceleration.

9. The method according to any of claims 4 to 8, wherein the compensation unit (4) is adjusted such that there is no counteracting force from the brake master cylinder (3) to the brake pedal (2) in the initial range (8).

10. The method according to the preceding claim, wherein a brake pedal counteracting force in the initial range (8) is simulated by means of a spring element.

## Patentansprüche

1. Fahrzeugbremssystem, umfassend:
mindestens eine Reibungsbremse, welche über ein Bremspedal (2) und einen Hauptbremszylinder (3) betätigt werden kann,
eine regenerative Bremse,
eine Ausgleichseinheit (4), welche das Bremspedal (2) mechanisch mit dem Hauptbremszylinder (3) auf eine veränderbare Weise koppelt,
einen Sensor, welcher dafür angepasst ist, mindestens einen Anfangsbereich (8) eines Bremspedalwegs zu erfassen, und
eine elektronische Steuereinheit, welche dafür angepasst ist,
ein Signal von dem Sensor auszuwerten, um die regenerative Bremse zu betätigen, wenn ein Benutzer das Bremspedal (2) im Anfangsbereich (8) betätigt,
eine Beziehung zwischen einer Bremsanforderung eines Benutzers und eines durch die regenerative Bremse erzeugten Bremsdrehmoments zu überwachen, und
die mechanische Kopplung zwischen dem Bremspedal (2) und dem Hauptbremszylinder (3) über die Ausgleichseinheit (4) zu verändern, um dadurch die Reibungsbremse zu betätigen, wenn die Bremsanforderung des Benutzers nicht mit dem von der regenerativen Bremse erzeugten Bremsdrehmoment übereinstimmt, um diese Übereinstimmung wiederherzustellung.

2. Fahrzeugbremssystem nach Anspruch 1, wobei die Ausgleichseinheit (4) ein Element zur Betätigung des Bremspedals (6), welches wirksam mit dem Bremspedal (2) verbunden ist, ein Element zur Betätigung des Hauptbremszylinders (10), welches wirksam mit dem Hauptbremszylinder (3) verbunden ist, und ein Betätigungselement (12) aufweist, wobei das Element zur Betätigung des Bremspedals (6) und das Element zur Betätigung des Hauptbremszylinders (10) mittels des Betätigungselements (12) zueinander verschiebbar sind.

3. Fahrzeugbremssystem nach Anspruch 1 oder 2, wobei die Ausgleichseinheit (4) entweder einen Mechanismus aus Ritzel (14) und Zahnrad (15), einen Mechanismus aus Zahnkranz (16) und Zahnrad (15), einen Mechanismus aus Zahnstange (17) und Ritzel (14) oder einen Mechanismus aus einer Kurvenscheibe (18) aufweist.

4. Verfahren zum Betreiben eines Fahrzeugbremssystems nach einem der vorhergehenden Ansprüche, aufweisend mindestens eine Reibungsbremse, welche über ein Bremspedal (2) und einen Hauptbremszylinder (3) betätigt werden kann, eine regenerative Bremse, und eine Ausgleichseinheit (4), welche das Bremspedal (2) mechanisch mit dem Hauptbremszylinder (3) koppelt, wobei das Verfahren die folgenden Schritte aufweist:
Erfassen von mindestens einem Anfangsbereich (8) eines Bremspedalwegs über einen Sensor;
Betätigen der regenerativen Bremse, wenn ein Benutzer das Bremspedal (2) im Anfangsbereich (8) betätigt;
Überwachen einer Beziehung zwischen einer Bremsanforderung eines Benutzers und eines durch die regenerative Bremse erzeugten Bremsdrehmoments; und
Verändern der mechanische Kopplung zwischen dem Bremspedal (2) und dem Hauptbremszylinder (3) über die Ausgleichseinheit (4), um dadurch die Reibungsbremse zu betätigen, wenn die Bremsanforderung des Benutzers nicht mit dem von der regenerativen Bremse erzeugten Bremsdrehmoment übereinstimmt, um diese Übereinstimmung wiederherzustellen.

5. Verfahren nach Anspruch 4, wobei Verändern der mechanischen Kopplung zwischen dem Bremspedal (2) und dem Hauptbremszylinder (3) das Verschieben eines Elements zur Betätigung des Bremspedals (6) der Ausgleichseinheit (4), welches wirksam mit dem Bremspedal (2) verbunden ist, und eines Elements zur Betätigung des Hauptbremszylinders (10) der Ausgleichseinheit (4), welches wirksam mit dem Hauptbremszylinder (3) verbunden ist, durch ein Betätigungselement (12) relativ zueinander umfasst.

6. Verfahren nach Anspruch 4 oder 5, wobei das Fahrzeugbremssystem weiter eine elektronische Stabilitätssteuereinheit und/oder eine Antiblockiersystemeinheit aufweist, wobei die tatsächliche Einstellung der Ausgleichseinheit (4) beim Auftreten eines Ereignisses der elektronischen Stabilitätskontrolle oder eines Ereignisses des Antiblockiersystems fest beibehalten wird, bis das Bremspedal (2) entlastet wird.

7. Verfahren nach einem der Ansprüche 4 bis 6, wobei die Bremsanforderung des Benutzers über den Bremspedalweg festgestellt wird.

8. Verfahren nach einem der Ansprüche 4 bis 7, wobei das von der regenerativen Bremse erzeugte Bremsdrehmoment über eine Fahrzeugverzögerung festgestellt wird.

9. Verfahren nach einem der Ansprüche 4 bis 8, wobei die Ausgleichseinheit (4) so eingestellt wird, dass es im Anfangsbereich (8) keine Gegenkraft vom Hauptbremszylinder (3) zum Bremspedal (2) gibt.

10. Verfahren nach einem der vorhergehenden Ansprüche, wobei eine Gegenkraft des Bremspedals im Anfangsbereich (8) mittels eines Federelements simuliert wird.

## Revendications

1. Système de freinage de véhicule comprenant :
au moins un frein à friction pouvant être actionné via une pédale de frein (2) et un maître-cylindre de frein (3) ;
un frein régénératif ;
une unité de compensation (4) couplant mécaniquement la pédale de frein (2) avec le maître-cylindre de frein (3) de manière modifiable ;
un capteur conçu pour détecter au moins une plage initiale (8) d'une course de pédale de frein ; et
une unité de commande électronique conçue pour :
- évaluer un signal provenant du capteur pour actionner le frein régénératif lorsqu'un utilisateur actionne la pédale de frein (2) dans la plage initiale (8) ;
- surveiller une relation entre une demande de freinage d'utilisateur et un couple de freinage généré par le frein régénératif ; et
- modifier le couplage mécanique entre la pédale de frein (2) et le maître-cylindre de frein (3) via l'unité de compensation (4) pour ainsi actionner le frein à friction lorsque la demande de freinage d'utilisateur n'est pas corrélée au couple de freinage généré par le frein régénératif afin de rétablir cette corrélation.

2. Système de freinage de véhicule selon la revendication 1, dans lequel l'unité de compensation (4) comprend un élément d'actionnement de pédale de frein (6) relié en fonctionnement à la pédale de frein (2), un élément d'actionnement de maître-cylindre de frein (10) relié en fonctionnement au maître-cylindre de frein (3) et un actionneur (12), dans lequel l'élément d'actionnement de pédale de frein (6) et l'élément d'actionnement de maître-cylindre de frein (10) sont déplaçables l'un par rapport à l'autre au moyen de l'actionneur (12).

3. Système de freinage de véhicule selon la revendication 1 ou 2, dans lequel l'unité de compensation (4) comprend un élément parmi un mécanisme de pignon (14) et d'engrenage (15), un mécanisme d'engrenage annulaire (16) et d'engrenage (15), un mécanisme de râtelier (17) et de pignon (14) et un mécanisme de came (18).

4. Procédé d'actionnement d'un système de freinage de véhicule particulièrement selon l'une quelconque des revendications précédentes, comprenant au moins un frein à friction pouvant être actionné via une pédale de frein (2) et un maître-cylindre de frein (3), un frein régénératif et une unité de compensation (4) couplant mécaniquement la pédale de frein (2) avec le maître-cylindre de frein (3), le procédé comprenant :
la détection d'au moins une plage initiale (8) d'une course de pédale de frein via un capteur ;
l'actionnement du frein régénératif lorsqu'un utilisateur actionne la pédale de frein (2) dans la plage initiale (8) ;
la surveillance d'une relation entre une demande de freinage d'utilisateur et un couple de freinage généré par le frein régénératif ; et
la modification du couplage mécanique entre la pédale de frein (2) et le maître-cylindre de frein (3) via l'unité de compensation (4) pour ainsi actionner le frein à friction lorsque la demande de freinage d'utilisateur n'est pas corrélée au couple de freinage généré par le frein régénératif afin de rétablir cette corrélation.

5. Procédé selon la revendication 4, dans lequel la modification du couplage mécanique entre la pédale de frein (2) et le maître-cylindre de frein (3) comprend le déplacement d'un élément d'actionnement de pédale de frein (6) de l'unité de compensation (4) reliée en fonctionnement à la pédale de frein (2) et d'un élément d'actionnement de maître-cylindre de frein (10) de l'unité de compensation (4) relié en fonctionnement au maître-cylindre de frein (3) l'un par rapport à l'autre au moyen d'un actionneur (12).

6. Procédé selon la revendication 4 ou 5, le système de freinage de véhicule comprenant en outre une unité de commande de stabilité électronique et/ou une unité de système de freinage antiverrouillage, dans lequel le réglage réel de l'unité de compensation (4) est maintenu fixement en cas d'apparition d'un événement de contrôle de stabilité électronique ou d'un événement de système de freinage antiverrouillage jusqu'à ce que la pédale de frein (2) soit relâchée.

7. Procédé selon l'une quelconque des revendications 4 à 6, dans lequel la demande de freinage d'utilisateur est déterminée via la course de pédale de frein.

8. Procédé selon l'une quelconque des revendications 4 à 7, dans lequel le couple de freinage généré par le frein régénératif est déterminé via une décélération de véhicule.

9. Procédé selon l'une quelconque des revendications 4 à 8, dans lequel l'unité de compensation (4) est réglée de telle sorte qu'il n'y a pas de force antagoniste exercée du maître-cylindre de frein (3) à la pédale de frein (2) dans la plage initiale (8).

10. Procédé selon la revendication précédente, dans lequel une force antagoniste de pédale de frein dans la plage initiale (8) est simulée au moyen d'un élément de ressort.
